# EUROPÄISCHE PATENTANMELDUNG

(11) **EP 3 531 480 A1**
(43) Veröffentlichungstag der Anmeldung: **28.08.2019**
(21) Anmeldenummer: 18158238.8
(22) Anmeldetag: 22.02.2018
(51) Int. Cl.: H01M 4/36, H01M 4/90, H01M 4/92, H01M 12/06

(54) **ELEKTRODE, METALL/LUFT-ZELLE, VERFAHREN UND SCHICHTVERBUND**

(71) Anmelder: VARTA Microbattery GmbH, 73479 Ellwangen (DE)
(72) Erfinder: Krebs, Martin, 73494 Rosenberg (DE)
(74) Vertreter: Patentanwaltskanzlei Cartagena

(57) **Zusammenfassung**

Eine Elektrode (200) für Metall/Luft-Zellen (303), in denen bei einer Entladung kathodenseitig eine Reduktion von Sauerstoff unter Hydroxidionenbildung und bei der Ladung eine Oxidation von Hydroxidionen unter Sauerstoffbildung erfolgt, ist als Schicht ausgebildet und weist eine erste Flachseite (211) und eine, der ersten Flachseite (211) abgewandte, zweite Flachseite (212) auf. Die Elektrode (200) umfasst eine poröse Matrix (213) aus einem polymeren Bindermaterial, in die ein erster und ein zweiter Katalysator (214 und 215) eingebettet sind, wobei der erste Katalysator (214) die Sauerstoffbildung im Ladefall und der zweite Katalysator (215) die Reduktion von Sauerstoff im Entladefall katalysiert. Der erste Katalysator (214) ist innerhalb der Matrix (213) an der ersten Flachseite (211) in einer höheren Konzentration enthalten als an der zweiten Flachseite (212). Die Elektrode (200) findet insbesondere Anwendung als Sauerstoffkathode in Metall/Luft-Zellen (303). Zur Herstellung einer solchen Elektrode (200) wird eine Mischung aus dem polymeren Bindermaterial und dem zweiten Katalysator (215) gebildet und zu einer Schicht verarbeitet. Der erste Katalysator (214) wird dann in die eine Flachseite (211) der Schicht eingearbeitet. Vor der Weiterverarbeitung kann die gebildete Elektrode (200) mit einer Luftverteilerschicht (202) zu einem Schichtverbund (201) kombiniert werden.

## Beschreibung

Die Erfindung betrifft eine Elektrode, die insbesondere Anwendung als Sauerstoffkathode in Metall/Luft-Zellen findet, eine Metall/Luft-Zelle mit einer solchen Elektrode, ein Verfahren zur Herstellung der Elektrode und einen Schichtverbund, der die Elektrode umfasst.

Metall/Luft-Zellen enthalten als elektrochemische Aktivkomponenten üblicherweise eine Metallanode und eine Sauerstoffkathode, die durch einen mit einem ionenleitfähigen Elektrolyten getränkten Separator voneinander getrennt sind. Die Metallanode, die Sauerstoffkathode und der Separator sind in der Regel im Inneren eines Gehäuses angeordnet. Bei der Entladung wird an der Sauerstoffkathode Sauerstoff unter Elektrodenaufnahme reduziert. Es entstehen Hydroxidionen, die über den Elektrolyten zur Anode wandern können. Dort wird ein Metall unter Elektronenabgabe oxidiert. Die entstehenden Metallionen reagieren mit den Hydroxidionen ab.

Es existieren sowohl primäre als auch sekundäre Metall/Luft-Zellen. Eine sekundäre Metall/Luft-Zelle wird geladen, indem zwischen der Metallanode und der Sauerstoffkathode eine elektrische Spannung angelegt und die beschriebene elektrochemische Reaktion umgekehrt wird. Dabei wird Sauerstoff freigesetzt.

Metall/Luft-Zellen weisen eine relativ hohe Energiedichte auf, weil der Bedarf an Sauerstoff an der Sauerstoffkathode durch Sauerstoff aus der Umgebung gedeckt werden kann. Die Gehäuse von Metall/Luft-Zellen weisen zu diesem Zweck mindestens eine Eintrittsöffnung auf, über die beispielsweise Luftsauerstoff eindringen und zur Luftkathode gelangen kann.

Das bekannteste Beispiel einer Metall/Luft-Zelle ist die Zink/Luft-Zelle. In Knopfzellenform findet diese insbesondere als Energiequelle für Hörgeräte Verwendung.

Als Sauerstoffkathoden kommen in Metall/Luft-Zellen üblicherweise Gasdiffusionselektroden zum Einsatz. Gasdiffusionselektroden sind Elektroden, in denen die an der elektrochemischen Reaktion beteiligten Stoffe (in der Regel ein Katalysator, ein Elektrolyt und Luftsauerstoff) nebeneinander in fester, flüssiger und gasförmiger Form vorliegen und miteinander in Kontakt treten können. Der Katalysator katalysiert die Reduktion des Luftsauerstoffs bei der Entladung.

Am häufigsten kommen in Metall/Luft-Zellen als Sauerstoffkathode kunststoffgebundene Gasdiffusionselektroden zum Einsatz. Solche Gasdiffusionselektroden sind beispielsweise in der DE 3722019 A1 beschrieben. In kunststoffgebundenen Gasdiffusionselektroden bildet ein Kunststoffbinder (meist Polytetrafluorethylen, kurz PTFE) eine poröse Matrix aus, in die als Katalysator Partikel aus einem elektrokatalytisch aktiven Material (zum Beispiel aus einem Edelmetall wie Platin oder Palladium oder aus einem Manganoxid) eingelagert sind. Diese müssen die erwähnte Umsetzung von Luftsauerstoff katalysieren können. Die Herstellung solcher Elektroden erfolgt in aller Regel, indem eine Trockenmischung aus dem Binder und dem Katalysator zu einer Folie ausgewalzt wird. Diese kann wiederum in ein Metallnetz oder ein Metallgitter, zum Beispiel aus Nickel, eingewalzt werden. Das Metallnetz bildet eine Leiterstruktur innerhalb der Sauerstoffkathode und dient zu ihrer elektrischen Kontaktierung.

Für die Aufladung einer Metall/Luft-Zelle setzt man der Sauerstoffkathode in der Regel einen speziellen, die Sauerstoffbildung katalysierenden Katalysator zu. Bei der Ladung der Metall/Luft-Zelle erfolgt die Sauerstoffbildung direkt an diesem Katalysator.

Problematisch ist hierbei, dass der gebildete Sauerstoff abtransportiert werden muss, damit in den Gehäusen von Metall/Luft-Zellen keine irregulären Drücke entstehen, die die Zelle schädigen können. Dies ist nicht einfach zu vermeiden, da in vielen Fällen zumindest ein Teil des gebildeten Sauerstoffs die Sauerstoffkathode erst durchqueren muss um aus dem Gehäuse austreten zu können.

Der vorliegenden Erfindung lag die Aufgabe zugrunde, gegenüber dem Stand der Technik verbesserte Sauerstoffkathoden für Metall/Luft-Zellen bereitzustellen.

Zur Lösung dieser Aufgabe schlägt die Erfindung die Elektrode mit den in Anspruch 1 genannten Merkmalen sowie das Verfahren mit den in Anspruch 14 genannten Merkmalen vor. Metall/Luft-Zellen mit einer solchen Elektrode und ein Schichtverbund mit einer solchen Elektrode sind ebenfalls Gegenstand der Erfindung. Weiterbildungen der Erfindung sind Gegenstand von Unteransprüchen.

Die erfindungsgemäße Elektrode zeichnet sich stets durch die folgenden Merkmale aus:
a. Die Elektrode ist als Schicht ausgebildet und weist eine erste Flachseite und eine, der ersten Flachseite abgewandte, zweite Flachseite auf, und
b. die Elektrode umfasst eine poröse Matrix aus einem polymeren Bindermaterial, und
c. in die Matrix sind ein erster und ein zweiter Katalysator eingebettet, wobei der erste Katalysator die Sauerstoffbildung im Ladefall und der zweite Katalysator die Reduktion von Sauerstoff im Entladefall katalysiert, und
d. der erste Katalysator ist innerhalb der Matrix an der ersten Flachseite in einer höheren Konzentration enthalten als an der zweiten Flachseite.

Die Schicht weist bevorzugt eine Dicke im Bereich von 0,1 mm bis 2 mm, besonders bevorzugt eine Dicke von 0,1 bis 1 mm, insbesondere von 0,1 mm bis 0,5 mm, auf. Die Elektrode ist bevorzugt als Schicht mit gleichmäßiger Dicke ausgebildet. Die erste und die zweite Flachseite weisen in aller Regel exakt die gleiche Fläche auf. Ihre Fläche wird bevorzugt durch einen umlaufenden Rand begrenzt.

Beispielsweise kann die Schicht als dünne, kreisrunde Scheibe mit einer gleichmäßigen Dicke im Bereich von 0,1 mm bis 1 mm und einem Durchmesser zwischen 5 mm und 20 mm ausgebildet sein.

Die Porosität der Matrix rührt bevorzugt daher, dass zur Herstellung der Elektrode das polymere Bindermaterial in Partikelform bereitgestellt und mit weiteren partikulären Komponenten zu der Elektrode verarbeitet wird, siehe hierzu auch die untenstehenden Ausführungen zum erfindungsgemäßen Verfahren. In der Matrix existieren Zwischenräume zwischen den Partikeln aus dem polymeren Bindermaterial. Untereinander verbundene Zwischenräume bilden die erwähnte Porenstruktur aus. Die Poren sind wichtig, da in sie Elektrolyt und Luftsauerstoff eindringen und an dem in die Matrix eingebetteten Katalysator abreagieren können.

Der erste und der zweite Katalysator werden entsprechend der zu katalysierenden chemischen Reaktion ausgewählt. Besonders bevorzugt sind der erste und der zweite Katalysator derart gewählt, dass sie jeweils nur die ihnen zugewiesene Reaktion katalysieren können und nicht auch die Reaktion des jeweils anderen Katalysators. Mit anderen Worten, bevorzugt unterscheiden sich der erste und der zweite Katalysator stofflich voneinander.

Vom Stand der Technik unterscheidet sich die erfindungsgemäße Elektrode insbesondere durch obiges Merkmal d. Während der Stand der Technik lediglich Elektroden für Metall/Luft-Zellen kennt, bei denen Katalysatoren herstellungsbedingt homogen in einer Kunststoffmatrix verteilt sind, beispielsweise wie bei den in der DE 3722019 A1 beschriebenen Elektroden, liegt erfindungsgemäß der Katalysator für die Sauerstoffbildung in einem Bereich der Elektrode konzentriert vor. Entsprechend entsteht Sauerstoff im Ladefall auch bevorzugt in diesem Bereich. Dies lässt sich im Hinblick auf das der Erfindung zugrundeliegende Problem vorteilhaft nutzen, wie weiter unten noch ausführlich erläutert wird.

Es ist bevorzugt, dass sich die Elektrode durch mindestens eines der folgenden zusätzlichen Merkmale, besonders bevorzugt durch eine Kombination der drei unmittelbar folgenden zusätzlichen Merkmale a. bis c., auszeichnet:
a. Der erste Katalysator liegt in partikulärer Form vor.
b. Die Schicht umfasst eine erste Lage und eine zweite Lage und gegebenenfalls eine Zwischenlage zwischen der ersten und der zweiten Lage.
c. Die Konzentration an Partikeln des ersten Katalysators ist in der ersten Lage größer als in der zweiten Lage.

Besonders bevorzugt besteht der erste Katalysator aus Partikeln mit einer mittleren Partikelgröße (d50) im Bereich von 500 nm um 50 µm.

Weiterhin ist es bevorzugt, dass es sich bei dem ersten Katalysator um mindestens ein Mitglied aus der Gruppe mit Kobaltoxid (Co₃O₄) und Platin handelt.

Die als Schicht ausgebildete Elektrode ist bevorzugt mehrlagig ausgebildet. In einigen Ausführungsformen kann es bevorzugt sein, die erste und die zweite Lage sowie ggf. die Zwischenlage in separaten Herstellungsschritten zu fertigen und zu der Schicht zusammenzusetzen.

In weiteren bevorzugten Ausführungsformen ist die Schicht nicht aus unterschiedlichen Lagen zusammengesetzt, lässt sich aber in die genannten Lagen unterteilen, beispielsweise anhand unterschiedlicher Konzentrationen des ersten Katalysators.

Besonders bevorzugt ist die Konzentration an Partikeln des ersten Katalysators in der ersten Lage größer als in der Zwischenlage und in der Zwischenlage größer als in der zweiten Lage. Mit anderen Worten: Die Konzentration fällt bevorzugt graduell von der ersten Lage zur zweiten Lage hin ab. Es ist aber auch denkbar, dass die zweite Lage oder die Zwischenlage und die zweite Lage vollständig frei von Partikeln des ersten Katalysators sind.

Bevorzugt ist die erste Lage durch die erste Flachseite und die zweite Lage oder durch die erste Flachseite und die Zwischenlage begrenzt. Die zweite Lage ist bevorzugt durch die zweite Flachseite und die erste Lage oder durch die zweite Flachseite und die Zwischenlage begrenzt.

Es ist bevorzugt, dass sich die Elektrode durch mindestens eines derfolgenden zusätzlichen Merkmale, besonders bevorzugt durch eine Kombination der zwei unmittelbar folgenden Merkmale a. und b., auszeichnet:
a. Der zweite Katalysator liegt in partikulärer Form vor.
b. Der zweite Katalysator ist innerhalb der Matrix gleichmäßig verteilt.

Besonders bevorzugt besteht der zweite Katalysator aus Partikeln mit einer mittleren Partikelgröße (d50) im Bereich von 500 nm um 50 µm.

Weiterhin ist es bevorzugt, dass es sich bei dem zweiten Katalysator um mindestens ein Mitglied aus der Gruppe mit Silber, Platin und Manganoxid handelt.

Wenn die Schicht die beschriebenen Lagen umfasst, so ist in einer bevorzugten Ausführungsform die Konzentration des zweiten Katalysators innerhalb der Lagen gleichmäßig verteilt. Es kann jedoch auch bevorzugt sein, dass die Konzentration des zweiten Katalysators beispielsweise in der zweiten Lage größer ist als in der ersten Lage oder in der zweiten Lage und der Zwischenlage größer ist als in der ersten Lage.

Es ist bevorzugt, dass sich die Elektrode durch mindestens eines derfolgenden zusätzlichen Merkmale, gegebenenfalls durch eine Kombination der drei unmittelbar folgenden zusätzlichen Merkmale a. bis c., auszeichnet:
a. Die Elektrode umfasst eine metallische Leiterstruktur, die in die Matrix eingebettet ist.
b. Die metallische Leiterstruktur ist in die zweite Lage eingebettet.
c. Die metallische Leiterstruktur ist aus einem metallischen Netz oder Gitter gebildet.

Eine derartige Leiterstruktur dient der elektrischen Kontaktierung der Elektrode. In aller Regel tritt sie an dem umlaufenden Rand der als Schicht ausgebildeten Elektrode aus der Elektrode hervor. Bevorzugt ist das metallische Netz oder Gitter aus Nickel oder einer Legierung davon gebildet. Das metallische Netz oder Gitter kann beispielsweise aber auch aus Silber oder aus vernickeltem Stahl bestehen.

Die metallische Leiterstruktur muss nicht unbedingt vollständig in die Matrix eingebettet sein. Vielmehr kann es auch bevorzugt sein, dass die metallische Leiterstruktur an der zweiten Flachseite offen liegt, das heißt direkt elektrisch kontaktierbar ist.

Es ist besonders bevorzugt, dass sich die Elektrode durch mindestens eines der folgenden zusätzlichen Merkmale, besonders bevorzugt durch eine Kombination der drei folgenden zusätzlichen Merkmale, auszeichnet:
a. Die Elektrode ist als Folie ausgebildet.
b. Das polymere Bindermaterial ist ein hydrophobes Kunststoffmaterial, insbesondere PTFE (Polytetrafluorethylen).
c. Auf die erste Flachseite der Elektrode ist eine poröse hydrophobe Sperrschicht, insbesondere aus PTFE, aufgebracht.

Die Elektrode kann beispielsweise aus einer Trockenmischung gebildet werden, die zu einer Folie gewalzt wird. Diese Folie kann in einem späteren Schritt an die gewünschte Zell-Form angepasst werden, indem sie beispielsweise zugeschnitten oder ausgestanzt wird.

Wie bereits erwähnt, liegt das polymere Bindermaterial auch noch in der Schicht bevorzugt partikulär vor. Bei dem polymeren Bindermaterial handelt es sich bevorzugt um PTFE-Partikel bzw. PTFE-Pulver.

An Stelle des hydrophoben Kunststoffmaterials kann in einigen Ausführungsformen auch ein hydrophiles Bindermaterial wie z.B. Polyvinylalkohol verwendet werden.

Die Sperrschicht soll im Betrieb einen Elektrolytaustritt aus der Matrix über die erste Flachseite verhindern. Während die Matrix der Elektrode allein durch den darin eingebetteten Katalysator neben hydrohoben auch hydrophile Eigenschaften aufweist und somit einen wässrigen Elektrolyten aufnehmen kann, ist die Sperrschicht bevorzugt ausschließlich hydrophob ausgebildet, beispielsweise aus reinem PTFE, und weist also keine hydrophilen Bestandteile auf. Sie ist entsprechend dazu in der Lage, einen wässrigen Elektrolyten abzustoßen, kann jedoch gleichzeitig den Zutritt von Sauerstoff zur katalysator- und elektrolythaltigen Schicht gewährleisten.

Bevorzugt handelt es sich bei der Sperrschicht um eine mikroporöse Folie, insbesondere eine sehr dünne Folie, die mit der ersten Flachseite beispielsweise durch Lamination verbunden sein kann. Besonders geeignet sind mikroporöse Membranen aus gerecktem (expandiertem) Polytetrafluorethylen (ePTFE), beispielsweise wie sie unter dem Handelsnamen Gore-Tex® vertrieben werden.

Es ist besonders bevorzugt, dass sich die Elektrode durch mindestens eines der folgenden zusätzlichen Merkmale, besonders bevorzugt durch eine Kombination der zwei unmittelbar folgenden Merkmale a. und b., auszeichnet:
a. Die Elektrode umfasst mindestens einen partikulären Leitfähigkeitsverbesserer, bevorzugt aus der Gruppe mit Ruß, Graphit und Aktivkohle, der in die Matrix eingebettet ist.
b. Der mindestens eine Leitfähigkeitsverbesserer ist innerhalb der Matrix gleichmäßig verteilt.

Alternativ kann es auch bevorzugt sein, dass die Konzentration des mindestens einen Leitfähigkeitsverbesserers in der zweiten Lage und/oder der gegebenenfalls vorhandenen Zwischenlage größer ist als in der ersten Lage.

Befindet sich auf der ersten Flachseite der Elektrode die erwähnte poröse hydrophobe Sperrschicht, so ist diese bevorzugt frei von dem mindestens einen Leitfähigkeitsverbesserer.

Die erfindungsgemäße Metall/Luft-Zelle, in der bei einer Entladung kathodenseitig eine Reduktion von Sauerstoff unter Hydroxidionenbildung und bei der Ladung eine Oxidation von Hydroxidionen unter Sauerstoffbildung erfolgt, umfasst eine Metallanode und eine Sauerstoffkathode und einen Separator, wobei die Sauerstoffkathode die oben beschriebene erfindungsgemäße Elektrode ist.

Bei der Metallanode handelt es sich bevorzugt um eine Anode aus Zink oder einer Zinklegierung. Es kommen aber auch andere unedle Metalle wie Magnesium oder Aluminium oder Legierungen dieser Metalle in Frage.

Bei dem Separator handelt es sich bevorzugt um ein poröses Flächengebilde, insbesondere um eine poröse Folie oder um ein Vlies oder ein Filz oder ein textiles Gewebe. Bevorzugt ist der Separator aus einem Kunststoff gefertigt, beispielsweise aus einem Polyolefin oder aus einem Polyester.

Es ist besonders bevorzugt, dass sich die Metall/Luft-Zelle durch mindestens eines der folgenden zusätzlichen Merkmale, insbesondere durch eine Kombination der unmittelbar folgenden Merkmale a. bis f., auszeichnet:
a. Sie umfasst ein Gehäuse mit einem Innenraum.
b. Sie umfasst in dem Innenraum die Metallanode, die Sauerstoffkathode und den Separator, wobei der Separator zwischen der Metallanode und der Sauerstoffkathode angeordnet ist.
c. Das Gehäuse weist mindestens eine Eintrittsöffnung auf, über die Luftsauerstoff in den Innenraum eindringen kann.
d: Die Sauerstoffkathode unterteilt den Innenraum in einen ersten und einen zweiten Teilbereich.
e: Die Sauerstoffkathode begrenzt den ersten Teilbereich mit ihrer ersten Flachseite, gegebenenfalls auch mit der darauf aufgebrachten Sperrschicht.
f: Die mindestens eine Eintrittsöffnung ist derart angeordnet, dass der Luftsauerstoff beim Eindringen in den Innenraum unmittelbar in den ersten Teilbereich eintritt.

In dieser Ausführungsform ist der Einsatz der erfindungsgemäßen Elektrode besonders vorteilhaft. Durch die lokal erhöhte Konzentration des ersten Katalysators an der ersten Flachseite kommt es im Ladefall ausschließlich an dieser Flachseite zur Bildung von Sauerstoff. Da die erste Flachseite unmittelbar den ersten Teilbereich begrenzt, kann entstehender Sauerstoff über die Eintrittsöffnungen entweichen ohne dass sich ein Druck innerhalb des Gehäuses aufbaut. Hierdurch wird die Gefahr minimiert, dass sich Sauerstoff durch einen langsamen Abtransport in dem Gehäuse ansammelt.

In einer weiteren besonders bevorzugten Ausführungsform zeichnet sich die Metall/Luft-Zelle durch mindestens eines der folgenden zusätzlichen Merkmale, insbesondere durch eine Kombination der unmittelbar folgenden Merkmale a. bis d., aus:
a. Das Gehäuse umfasst einen Bodenbereich.
b. Das Gehäuse und jeder seiner Bereiche weist eine in den Innenraum weisende Innenseite sowie eine entgegengesetzt gerichtete Außenseite auf.
c. Der Bodenbereich weist die mindestens eine Eintrittsöffnung auf, über die Luftsauerstoff in den Innenraum eindringen kann.
d. Die Sauerstoffkathode liegt mit der ersten Flachseite voran, gegebenenfalls auch mit der Sperrschicht voran, auf dem Bodenbereich auf und deckt die mindestens eine Eintrittsöffnung ab.

Die erfindungsgemäße Zelle ist bevorzugt als Knopfzelle ausgebildet. Das Gehäuse einer erfindungsgemäßen Zelle umfasst entsprechend einen Zellenbecher und einen Zellendeckel sowie eine Dichtung. Der Zellenbecher und der Zellendeckel bilden - wie bei Knopfzellen üblich - die Pole der Zelle.

In aller Regel benötigt die herzustellende Metall/Luft-Zelle einen flüssigen Elektrolyten. Bei diesem kann es sich insbesondere um eine Lauge, beispielsweise um Kalilauge, handeln. Es sind aber auch neutrale oder nahezu neutrale wässrige Elektrolyten einsetzbar, beispielsweise Ammoniumchlorid oder Zinkchlorid-Lösung.

Besonders bevorzugt weist der Bodenbereich eine Vielzahl der Eintrittsöffnungen auf.

In einer möglichen Weiterbildung umfasst die Metall/Luft-Zelle mindestens eines, bevorzugt alle der unmittelbar folgenden zusätzlichen Merkmale a. bis d.:
a. Der Bodenbereich des Gehäuses ist eben ausgebildet.
b. Die Sauerstoffkathode ist parallel zum Bodenbereich ausgerichtet, wobei ihre erste Flachseite, gegebenenfalls einschließlich der Sperrschicht, in Richtung des Bodenbereichs weist.
c. Zwischen dem Bodenbereich des Gehäuses und der Sauerstoffkathode befindet sich eine Luftverteilerschicht.
d. Die Luftverteilerschicht ist in flächigem Kontakt mit der ersten Flachseite der Sauerstoffkathode oder gegebenenfalls der darauf aufgebrachten Sperrschicht und der Innenseite des Bodenbereichs.

Es ist besonders bevorzugt, dass das Gehäuse einen ebenen Bodenbereich aufweist, auf dem insbesondere die Sauerstoffkathode und die Luftverteilerschicht und der Separator schichtweise angeordnet werden können. Besonders bevorzugt ist es hierbei, dass diese Komponenten parallel zu dem Bodenbereich ausgerichtet sind.

Durch die Luftverteilerschicht kann eine bessere flächige Verteilung von Umgebungsluft auf der Sauerstoffkathode erreicht werden. In möglichen Weiterbildungen kann sie mindestens eines der unmittelbar folgenden Merkmale a. bis d. aufweisen:
a. Bei der Luftverteilerschicht handelt es sich um eine mikroporöse Schicht.
b. Die Luftverteilerschicht ist als Folie ausgebildet.
c. Die Luftverteilerschicht ist ein Filterpapier, Vlies oder Filz.
d. Die Luftverteilerschicht besteht aus einem hydrophoben Kunststoffmaterial, insbesondere aus PTFE.

In einer bevorzugten Ausführungsform besteht die Luftverteilerschicht aus dem gleichen Material wie die Matrix der Sauerstoffkathode.

Der erfindungsgemäße Schichtverbund umfasst die erfindungsgemäße Elektrode sowie eine Ausführungsform der beschriebenen Luftverteilerschicht.

Es ist bevorzugt, dass sich der Schichtverbund durch mindestens eines der unmittelbar folgenden zusätzlichen Merkmale a. und/oder b. auszeichnet:
a. Die Luftverteilerschicht und die Elektrode sind über Lamination oder Verklebung miteinander verbunden.
b. Der Schichtverbund umfasst als eine weitere Schicht einen Separator.

Bei Verwendung eines Schichtverbunds können mehrere Komponenten der erfindungsgemäßen Metall/Luft-Zelle (die Luftkathode, der Separator und die Luftverteilerschicht) in einem Schritt verbaut werden.

Bevorzugt ist die Luftverteilerschicht auf der ersten Flachseite der Elektrode oder gegebenenfalls der darauf aufgebrachten Sperrschicht positioniert. Der Separator ist gegebenenfalls bevorzugt auf der zweiten Flachseite der Elektrode positioniert.

Das erfindungsgemäße Verfahren dient der Herstellung der erfindungsgemäßen Elektrode. Es umfasst bevorzugt die folgenden Schritte:
a. Es wird eine Mischung aus dem polymeren Bindermaterial, insbesondere Partikeln aus dem Bindermaterial, und dem zweiten Katalysator, insbesondere Partikeln des zweiten Katalysators, gebildet.
b. Die Mischung wird zu einer Schicht verarbeitet.
c. Der erste Katalysator wird in eine erste Flachseite der Schicht eingearbeitet, bevorzugt eingepresst, insbesondere eingewalzt.

Bei der Mischung handelt es sich bevorzugt um eine Trockenmischung, also ohne Lösungs- oder Dispergiermittel, die durch einfaches Auswalzen in eine stabile, zusammenhängende Form gebracht werden kann. Bevorzugt wird die Mischung vor der Verarbeitung zu der Schicht intensiv durchmischt und gegebenenfalls noch einmal granuliert. Dadurch wird eine homogene Verteilung des zweiten Katalysators in der Schicht gewährleistet.

Es ist bevorzugt, dass der erste Katalysator als Pulver auf die erste Flachseite der Schicht aufgebracht und dann in einem weiteren Schritt in die Schicht eingewalzt wird. Dadurch wird die lokale Anreicherung des ersten Katalysators an der ersten Flachseite gewährleistet.

Der erste Katalysator kann hierbei als trockenes Pulver aufgebracht, beispielsweise aufgestreut oder aufgerakelt, werden. Er kann aber auch in Form einer Suspension, beispielsweise einer wässrigen oder wasserhaltigen Suspension, aufgebracht, insbesondere aufgesprüht, werden. Im Falle des Aufbringens als Suspension kann sich ebenfalls das erwähnte Einpressen, insbesondere Einwalzen, anschließen. Gegebenenfalls kann das verwendete Suspensionsmittel, beispielsweise Wasser, vorher entfernt werden, beispielsweise durch Trocknung.

Alternativ zum Einpressen des ersten Katalysators in die erste Flachseite kann auf der erste Flachseite auch eine Mischung umfassend den ersten Katalysator und ein polymeres Bindermaterial, insbesondere das gleiche polymere Bindermaterial, das Bestandteil der Mischung mit dem zweiten Katalysator ist, als Schicht ausgewalzt werden. Gegebenenfalls wird so die oben erwähnte erste Lage der mehrlagigen Variante der als Schicht ausgebildeten Elektrode gefertigt.

Es ist bevorzugt, dass sich das Verfahren durch mindestens einen der folgenden zusätzlichen Schritte auszeichnet:
a. Der Mischung oder den Mischungen wird der mindestens eine Leitfähigkeitsverbesserer zugegeben.
b. Zur Bildung der metallischen Leiterstruktur wird ein metallisches Netz oder Gitter in die Folie eingebracht, insbesondere eingewalzt.

Der mindestens eine Leitfähigkeitsverbesserer kann sowohl der Mischung mit dem zweiten Katalysator als auch gegebenenfalls der Mischung mit dem ersten Katalysator zugesetzt werden.

In besonders bevorzugten Ausführungsformen weist die Mischung mit dem zweiten Katalysator die folgenden Komponenten in den folgenden Anteilen auf:
- Das polymere Bindermaterial, insbesondere das PTFE, in einem Anteil von 15 Gew.-% bis 65 Gew.-%.
- Den zweiten Katalysator, insbesondere die Partikel des zweiten Katalysators, in einem Anteil von 15 Gew.-% bis 65 Gew.-%.
- Den mindestens einen Leitfähigkeitsverbesserer in einem Anteil von 5 Gew.-% bis 45 Gew.-%.

Es ist bevorzugt, dass sich die Anteile der Komponenten in der Mischung auf 100 Gew.-% ergänzen.

Wenn die Mischung mit dem ersten Katalysator und dem polymeren Bindermaterial zum Einsatz kommt, so enthält diese bevorzugt die folgenden Komponenten in den folgenden Anteilen:
- Das polymere Bindermaterial, insbesondere das PTFE, in einem Anteil von 15 Gew.-% bis 65 Gew.-%.
- Den ersten Katalysator, insbesondere die Partikel des ersten Katalysators, in einem Anteil von 15 Gew.-% bis 65 Gew.-%.
- Den mindestens einen Leitfähigkeitsverbesserer in einem Anteil von 5 Gew.-% bis 45 Gew.-%.

Es ist auch hier bevorzugt, dass sich die Anteile der Komponenten in der Mischung auf 100 Gew.-% ergänzen.

Die metallische Netz oder Gitter wird bevorzugt in die zweite Flachseite der Folie eingebracht, insbesondere eingewalzt. In einigen bevorzugten Ausführungsform kann allerdings auch ein erstes metallisches Netz oder Gitter in die erste Flachseite und ein zweites metallisches Netz oder Gitter in die zweite Flachseite eingewalzt werden.

Nach dem Einarbeiten des Katalysators bzw. die Bildung der ersten Lage und/oder die Bildung der metallischen Leiterstruktur wird in bevorzugten Ausführungsformen die erwähnte Sperrschicht auf die erste Flachseite aufgebracht, beispielsweise durch Lamination oderVerklebung.

Weitere Merkmale, Einzelheiten und Vorzüge der Erfindung ergeben sich aus den Ansprüchen und der Zusammenfassung, derer beider Wortlaut durch Bezugnahme zum Inhalt der Beschreibung gemacht wird, der folgenden Beschreibung bevorzugter Ausführungsformen der Erfindung sowie anhand der Zeichnungen. Hierbei illustrieren, jeweils schematisch:
Figur 1 ein Beispiel einer aus dem Stand der Technik bekannten Sauerstoffkathode für eine Metall/Luft-Zelle, in der im Entladefall eine Reduktion von Sauerstoff und bei der Ladung eine Oxidation von Hydroxidionen katalysiert wird (Querschnittsdarstellung).
Figur 2 eine erfindungsgemäße Elektrode mit einer Sperrschicht (Querschnittsdarstellung).
Figur 3 eine Metall/Luft-Zelle in Knopfzellenform umfassend einen Schichtverbund einschließlich einer Elektrode gemäß Figur 2 (Querschnittsdarstellung).
Figur 4 einen vergrößerten Ausschnitt des in Fig. 3 dargestellten Querschnitts einer Metall/Luft-Zelle.

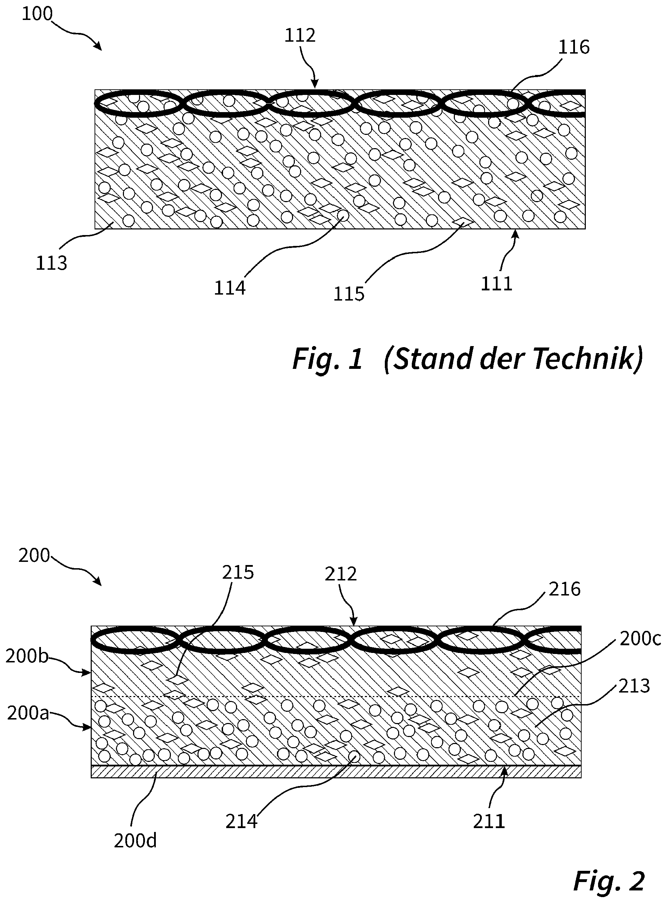

Die in Fig. 1 dargestellte Sauerstoffkathode 100 ist schichtartig ausgebildet und weist eine erste Flachseite 111 und eine zweite Flachseite 112 auf. Sie umfasst eine poröse Matrix 113 aus einem polymeren Bindermaterial, in die ein erster partikulärer Katalysator 114 (Partikel sind kreisförmig dargestellt) und ein zweiter partikulärer Katalysator 115 (Partikel sind rautenförmig dargestellt) eingebettet sind. Der erste Katalysator 114 und der zweite Katalysator 115 sind innerhalb der Matrix 113 im Wesentlichen homogen verteilt. Der erste Katalysator 114 katalysiert die Sauerstoffbildung im Ladefall, der zweite Katalysator 115 die Sauerstoffreduktion im Entladefall. Die Sauerstoffkathode 100 umfasst weiterhin eine auf der Seite der zweiten Flachseite 112 in die Matrix 113 eingebettete metallische Leiterstruktur 116 in Form eines Nickel-Netzes.

Die in Figur 2 dargestellte schichtförmige Elektrode 200 umfasst eine erste Flachseite 211 und eine zweite Flachseite 212. Die erste Flachseite 211 ist von der Sperrschicht 200d abgedeckt, bei der es sich um eine dünne Membran aus PTFE handelt.

Die Elektrode 200 umfasst weiterhin eine poröse Matrix 213 aus PTFE, in die ein erster partikulärer Katalysator 214 (Partikel sind kreisförmig dargestellt) und ein zweiter partikulärer Katalysator 215 (Partikel sind rautenförmig dargestellt) eingebettet sind. Der erste Katalysator 214 katalysiert die Sauerstoffbildung im Ladefall, der zweite Katalysator 215 die Sauerstoffreduktion im Entladefall.

Die Elektrode 200 lässt sich entlang der Grenzlinie 200c in eine erste Lage 200a und eine zweite Lage 200b unterteilen. Die beiden Lagen 200a und 200b unterscheiden sich darin, dass die Konzentration an Partikeln des ersten Katalysators 214 an der ersten Flachseite 211 und somit auch in der ersten Lage 200a größer als an der zweiten Flachseite 212 und somit auch in der zweiten Lage 200b ist. Vorliegend ist die Präsenz des ersten Katalysators 214 sogar ausschließlich auf die erste Lage 200a beschränkt. Durch die Anreicherung des ersten Katalysators 214 in der ersten Lage 200a wird sichergestellt, dass im Ladefall Sauerstoff ausschließlich in der ersten Lage generiert wird. Der Sauerstoff tritt entsprechend vorwiegend über die erste Flachseite 211 aus der Elektrode 200 aus.

Der zweite Katalysator 215 ist dagegen innerhalb der Elektrode 200 im Wesentlichen homogen verteilt, d.h., er ist innerhalb der ersten Lage 200a und der zweiten Lage 200b statistisch gleichmäßig verteilt.

Die Elektrode 200 umfasst weiterhin eine auf der Seite der zweiten Flachseite 212 in die Matrix 213 eingebettete metallische Leiterstruktur 216 in Form eines Nickel-Netzes.

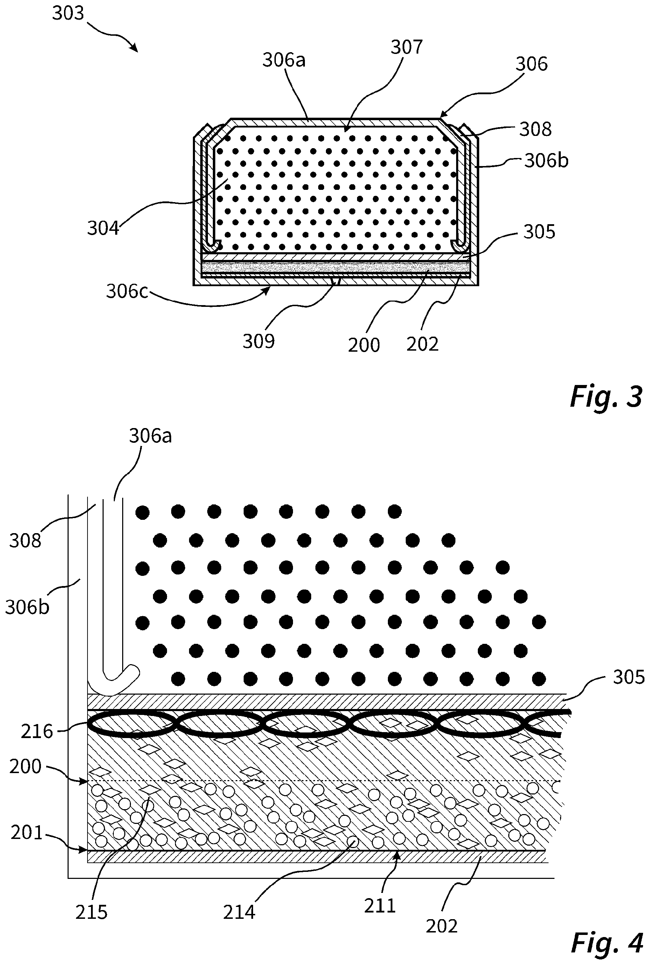

Die in den Figuren 3 und 4 dargestellte Metall/Luft-Zelle 303 umfasst ein Gehäuse 306 mit einem Innenraum 307, wobei Fig. 4 einen vergrößerten Teilbereich von Fig. 3 darstellt. In diesem Innenraum 307 ist neben einer Metallanode 304 und einem Separator 305 ein Schichtverbund 201 angeordnet, der neben einer - abgesehen von der fehlenden Sperrschicht 200d - analog zu Fig. 2 ausgebildeten Elektrode 200 die Luftverteilerschicht 202 umfasst. Bei der Luftverteilerschicht 202 handelt es sich um ein Vlies aus PTFE-Fasern.

Die Elektrode 200 des Schichtverbunds dient in der Metall/Luft-Zelle 303 als Sauerstoffkathode, in der bei der Entladung der Zelle 303 eine Reduktion von Sauerstoff unter Hydroxidionenbildung und bei der Ladung der Zelle 303 eine Oxidation von Hydroxidionen unter Sauerstoffbildung erfolgt.

Der Separator 305 und die Elektroden 200 und 304 sind mit einem alkalischen Elektrolyten getränkt, so dass Hydroxidionen zwischen den Elektroden 200 und 304 hin- und herwandern können. Als Metallanode 304 enthält die Metall/Luft-Zelle 303 metallisches Zink oder eine Zinklegierung.

Das Gehäuse 306 umfasst zwei Gehäuseteile 306a und 306b, zwischen denen eine Dichtung 308 angeordnet ist. Es weist einen Bodenbereich 306c auf, in dem mindestens eine Eintrittsöffnung 309 angeordnet ist, über die Luftsauerstoff in den Innenraum 307 eindringen und in der Elektrode 200 generierter Sauerstoff aus dem Gehäuse 306 entweichen kann.

Die Elektrode 200 ist parallel zum Bodenbereich 306c ausgerichtet, wobei ihre erste Flachseite 211 in Richtung des Bodenbereichs 306c weist. Zwischen dem Bodenbereich 306c und der Elektrode 200 befindet sich die Luftverteilerschicht 202. Diese ist in flächigem Kontakt mit der ersten Flachseite 211 der Elektrode 200 und der Innenseite des Bodenbereichs 306c.

## Patentansprüche

1. Elektrode (200) für Metall/Luft-Zellen (303), in denen bei einer Entladung kathodenseitig eine Reduktion von Sauerstoff unter Hydroxidionenbildung und bei der Ladung eine Oxidation von Hydroxidionen unter Sauerstoffbildung erfolgt, mit den folgenden Merkmalen:
a. Die Elektrode (200) ist als Schicht ausgebildet und weist eine erste Flachseite (211) und eine, der ersten Flachseite (211) abgewandte, zweite Flachseite (212) auf, und
b. die Elektrode (200) umfasst eine poröse Matrix (213) aus einem polymeren Bindermaterial, und
c. in die Matrix (213) sind ein erster Katalysator (214) und ein zweiter Katalysator (215) eingebettet, wobei der erste Katalysator (214) die Sauerstoffbildung im Ladefall und der zweite Katalysator (215) die Reduktion von Sauerstoff im Entladefall katalysiert, und
d. der erste Katalysator (215) (214) ist innerhalb der Matrix (213) an der ersten Flachseite (211) in einer höheren Konzentration enthalten als an der zweiten Flachseite (212).

2. Elektrode nach Anspruch 1 mit den folgenden zusätzlichen Merkmalen:
a. Der erste Katalysator (214) liegt in partikulärer Form vor, und
b. Die Schicht umfasst eine erste Lage (200a) und eine zweite Lage (200b) und gegebenenfalls eine Zwischenlage zwischen der ersten und der zweiten Lage, und
c. Die Konzentration an Partikeln des ersten Katalysators (214) ist in der ersten Lage (200a) größer als in der zweiten Lage (200b).

3. Elektrode nach Anspruch 1 oder nach Anspruch 2 mit mindestens einem der folgenden zusätzlichen Merkmale:
a. Der zweite Katalysator (215) liegt in partikulärer Form vor.
b. Der zweite Katalysator (215) ist innerhalb der Matrix (213) gleichmäßig verteilt.

4. Elektrode nach einem der vorherigen Ansprüche mit mindestens einem der folgenden zusätzlichen Merkmale:
a. Die Elektrode (200) umfasst eine metallische Leiterstruktur (216), die in die Matrix (213) eingebettet ist.
b. Die metallische Leiterstruktur (216) ist in die zweite Lage (200b) eingebettet.
c. Die metallische Leiterstruktur (216) ist aus einem metallischen Netz oder Gitter gebildet.

5. Elektrode nach einem der vorherigen Ansprüche mit mindestens einem der folgenden zusätzlichen Merkmale:
a. Die Elektrode (200) ist als Folie ausgebildet.
b. Das polymere Bindermaterial ist ein hydrophobes Kunststoffmaterial, insbesondere PTFE.
c. Auf die erste Flachseite (211) der Elektrode (200) ist eine poröse hydrophobe Sperrschicht (200d), insbesondere aus PTFE, aufgebracht.

6. Elektrode nach einem der vorherigen Ansprüche mit mindestens einem der folgenden zusätzlichen Merkmale:
a. Die Elektrode umfasst mindestens einen partikulären Leitfähigkeitsverbesserer, bevorzugt aus der Gruppe mit Ruß, Graphit und Aktivkohle, der in die Matrix (213) eingebettet ist.
b. Der mindestens eine Leitfähigkeitsverbesserer ist innerhalb der Matrix (213) gleichmäßig verteilt.

7. Metall/Luft-Zelle (303), in der bei einer Entladung kathodenseitig eine Reduktion von Sauerstoff unter Hydroxidionenbildung und bei der Ladung eine Oxidation von Hydroxidionen unter Sauerstoffbildung erfolgt, umfassend eine Metallanode (304) und eine Sauerstoffkathode und einen Separator (305), wobei die Sauerstoffkathode ein Elektrode (200) gemäß einem der vorhergehenden Ansprüche ist.

8. Metall/Luft-Zelle nach Anspruch 7 mit mindestens einem der folgenden zusätzlichen Merkmale:
a. Sie umfasst ein Gehäuse (306) mit einem Innenraum (307).
b. Sie umfasst in dem Innenraum (307) die Metallanode (304), die Sauerstoffkathode (200) und den Separator (305), wobei der Separator zwischen der Metallanode (304) und der Sauerstoffkathode (200) angeordnet ist.
c. Das Gehäuse (306) weist mindestens eine Eintrittsöffnung (309) auf, über die Luftsauerstoff in den Innenraum (307) eindringen kann.
d: Die Sauerstoffkathode (200) unterteilt den Innenraum (307) in einen ersten und einen zweiten Teilbereich.
e: Die Sauerstoffkathode (200) begrenzt den ersten Teilbereich mit ihrer ersten Flachseite (211).
f: Die mindestens eine Eintrittsöffnung (309) ist derart angeordnet, dass der Luftsauerstoff beim Eindringen in den Innenraum (307) unmittelbar in den ersten Teilbereich eintritt.

9. Metall/Luft-Zelle nach Anspruch 8 mit den folgenden zusätzlichen Merkmalen:
a. Das Gehäuse (306) umfasst einen Bodenbereich (306c), und
b. das Gehäuse (306) und jeder seiner Bereiche weist eine in den Innenraum (307) weisende Innenseite sowie eine entgegengesetzt gerichtete Außenseite auf, und
c. der Bodenbereich (306c) weist die mindestens eine Eintrittsöffnung (309) auf, über die Luftsauerstoff in den Innenraum (307) eindringen kann, und
d. die Sauerstoffkathode (200) liegt mit der ersten Flachseite (211) voran, gegebenenfalls auch mit der Sperrschicht (200d) voran, auf dem Bodenbereich (306c) auf und deckt die mindestens eine Eintrittsöffnung (309) ab.

10. Metall/Luft-Zelle nach Anspruch 9 mit mindestens einem der folgenden zusätzlichen Merkmale:
a. Der Bodenbereich (306c) des Gehäuses (306) ist eben ausgebildet.
b. Die Sauerstoffkathode (200) ist parallel zum Bodenbereich (306c) ausgerichtet, wobei ihre erste Flachseite (211), gegebenenfalls einschließlich der Sperrschicht (200d), in Richtung des Bodenbereichs (306c) weist.
c. Zwischen dem Bodenbereich (306c) des Gehäuses (306) und der Sauerstoffkathode (200) befindet sich eine Luftverteilerschicht (202).
d. Die Luftverteilerschicht (202) ist in flächigem Kontakt mit der ersten Flachseite (211) der Sauerstoffkathode (200) oder gegebenenfalls der darauf aufgebrachten Sperrschicht (200d) und der Innenseite des Bodenbereichs (306c).

11. Metall/Luft-Zelle nach Anspruch 10 mit mindestens einem der folgenden zusätzlichen Merkmale:
a. Bei der Luftverteilerschicht (202) handelt es sich um eine mikroporöse Schicht.
b. Die Luftverteilerschicht ist als Folie ausgebildet.
c. Die Luftverteilerschicht ist ein Filterpapier, Vlies oder Filz.
d. Die Luftverteilerschicht (202) besteht aus einem hydrophoben Kunststoffmaterial, insbesondere aus PTFE.

12. Ein Schichtverbund (201) umfassend eine Elektrode (200) nach einem der Ansprüche 1 bis 6, sowie eine Luftverteilerschicht (202) mit mindestens einem der Merkmale des Anspruchs 11.

13. Ein Schichtverbund nach Anspruch 12 mit den folgenden zusätzlichen Merkmalen:
a. Die Luftverteilerschicht (202) und die Elektrode (200) sind über Lamination oder Verklebung miteinander verbunden.
b. Der Schichtverbund (201) umfasst als eine weitere Schicht einen Separator (305).

14. Verfahren zur Herstellung einer Elektrode (200) nach einem der vorherigen Ansprüche 1 bis 6 mit den folgenden Schritten:
a. Es wird eine Mischung aus dem polymeren Bindermaterial und dem zweiten Katalysator (215) gebildet.
b. Die Mischung wird zu einer Schicht verarbeitet.
c. Der erste Katalysator (214) wird in eine erste Flachseite (211) der Schicht eingearbeitet.

15. Verfahren nach Anspruch 14 mit mindestens einem der folgenden zusätzlichen Schritte:
a. Der Mischung wird der mindestens eine Leitfähigkeitsverbesserer zugegeben.
b. Zur Bildung der metallischen Leiterstruktur (216) wird ein metallisches Netz oder Gitter in die Folie eingewalzt.
